**Europäisches Patentamt**

(19) **European Patent Office**

**Office européen des brevets**

(11) Veröffentlichungsnummer: **0 026 364**
**B1**

(12) EUROPÄISCHE PATENTSCHRIFT

(45) Veröffentlichungstag der Patentschrift:
03.10.84

(51) Int. Cl.³: **G 21 C 19/06**

(21) Anmeldenummer: **80105373.7**

(22) Anmeldetag: **09.09.80**

(54) **Lagergestell zur Aufnahme von sich in Längsrichtung erstreckenden Brennelementen.**

(30) Priorität: **26.09.79 DE 2938837**

(43) Veröffentlichungstag der Anmeldung:
**08.04.81 Patentblatt 81/14**

(45) Bekanntmachung des Hinweises auf die Patenterteilung:
**03.10.84 Patentblatt 84/40**

(84) Benannte Vertragsstaaten:
**AT CH FR IT LI**

(56) Entgegenhaltungen:
**DE - A - 2 822 397**
**DE - B - 1 217 513**

(73) Patentinhaber: **BROWN BOVERI REAKTOR GmbH,
Dudenstrasse 44, D-6800 Mannheim 1 (DE)**

(72) Erfinder: **Hennings, Uwe, Dipl.-Ing., Ortsstrasse 24,
D-6940 Weinheim (DE)**
Erfinder: **Tamassy, Kalman, Dipl.-Ing., T 6, 27,
D-6800 Mannheim 1 (DE)**

(74) Vertreter: **Dahlmann, Gerhard, Dipl.-Ing. et al, c/o Brown
Boveri & Cie., AG Zentralbereich ZPT/P Postfach 351,
D-6800 Mannheim (DE)**

ACTORUM AG

## Beschreibung

Die Erfindung betrifft ein Lagergestell zur Aufnahme von sich in Längsrichtung erstreckenden Brennelementen, das an seinem oberen Ende eine Gitterplatte und Einführhilfen zum erleichterten Einführen der Brennelemente in die Öffnungen der Gitterplatte aufweist.

Bei der Lagerung von sich in Längsrichtung erstreckenden Kernreaktor-Brennelementen in Lagergestellen werden diese, wie im Reaktor, senkrecht stehend gehalten. Dies geschieht durch Fixierung des Brennelementfusses auf einer Gestellgrundplatte, gegebenenfalls mittels zwischengesetzten Adaptern, die die konstruktive Ausbildung des Fusses unterschiedlicher Brennelementtypen berücksichtigen. Am oberen Ende werden die Brennelementköpfe nicht kraft- oder formschlüssig gehalten, da die Brennelemente leicht in die Öffnungen des oberen Gitters des Lagergestells einführbar sein müssen.

Die obere Öffnung für eine Brennelement-Gestellposition weist also ein bestimmtes seitliches Spiel auf. Ferner sind Einführhilfen, wie z. B. trichterförmige Bleche, auf dem oberen Gitter erforderlich, damit beim Herablassen des Brennelements mittels Kran der Fuss des Brennelements leicht in die Gestellposition hineingleiten kann.

Die Gebäudekonstruktion zur Aufnahme der Lagergestelle ist gegen Einwirkungen von aussen, wie z. B. Flugzeugabsturz, ausgelegt. Treffen derartige Einwirkungen z. B. auf die Seitenwände der Gebäudekonstruktion, so werden infolge Massenträgheit die Brennelemente gegen die der Stossrichtung zugewandten Seite des oberen Gestellgitters geschlagen. Da dies bei vielen Brennelementen gleichzeitig auftritt, sind die resultierenden Belastungen vom Gestell sehr schwer zu tragen.

Die Erfindung stellt sich daher die Aufgabe, die Brennelemente nach ihrem Einführen in die Gestellpositionen an ihrem oberen Ende, im Bereich des sogenannten Brennelementkopfes, spielfrei zu halten.

Erfindungsgemäss wird die Aufgabe dadurch gelöst, dass Teilbereiche der Einführhilfen als schwenkbare Klappen ausgebildet sind, dass zur Ausführung der Schwenkbewegung um Gelenkbolzen eine Schaftschraube vorgesehen ist, die mit einem Keilstück und einer Hülse versehen ist, wobei die Klappen an ihrem oberen Ende zwischen Keilstück und Hülse eingeklemmt sind.

Eine andere erfindungsgemässe Lösung der Aufgabe sieht vor, dass Teilbereiche der Einführhilfen als schwenkbare Klappen ausgebildet sind, dass zur Ausführung der Schwenkbewegung um Gelenkbolzen eine mit einer Ringnut versehene Bundschraube vorgesehen ist, dass jede Klappe eine Führungsnocke aufweist, und dass die Führungsnocken diametral gegenüberliegend in die Ringnut eingreifen.

Die vorgeschlagenen Lösungen haben den Vorteil, dass die Einführhilfen eine Doppelfunktion (Einführen und spielfrei halten) ausüben und dass die Steuerung der Klappen auf einfache Weise erfolgt.

Gemäss einer vorteilhaften Ausgestaltung ist die Schwenkbewegung der Klappen durch Anschläge begrenzt. Damit wird eine störungsfreie Schwenkbewegung der Klappen erreicht.

Eine bevorzugte Ausgestaltung sieht vor, dass die Klappen an bestimmten Flächen mit einer Farbkennzeichnung versehen sind, um von ausserhalb des Brennelementlagerbeckens die Stellung der Klappen erkennen zu können.

Anhand von zwei Ausführungsbeispielen und den Zeichnungen der Fig. 1 bis 5 wird das erfindungsgemässe Lagergestell für Brennelemente beschrieben. Dabei zeigen:

Fig. 1, 1a die perspektivische Darstellung eines Lagergestells,

Fig. 2 eine perspektivische Teilansicht mit der erfindungsgemässen Ausbildung zur spielfreien Halterung der Brennelemente,

Fig. 3, 3a einen Schnitt entlang der Linie III–III der Fig. 2,

Fig. 4 einen Schnitt entlang der Linie IV–IV der Fig. 2 und

Fig. 5, 5a eine andere Ausbildung zur spielfreien Halterung der Brennelemente.

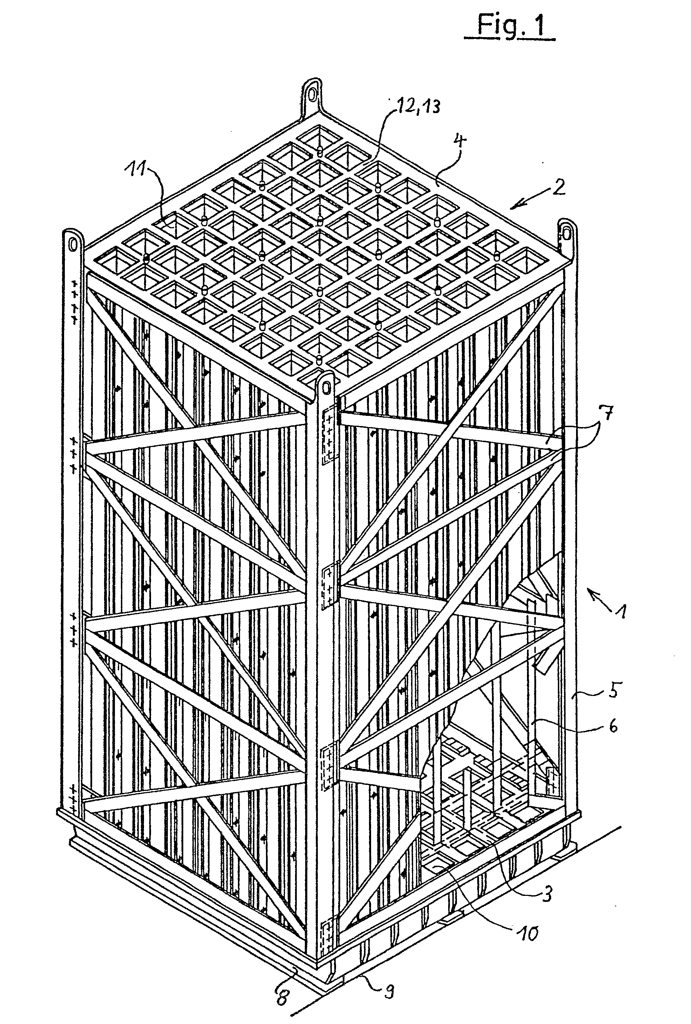

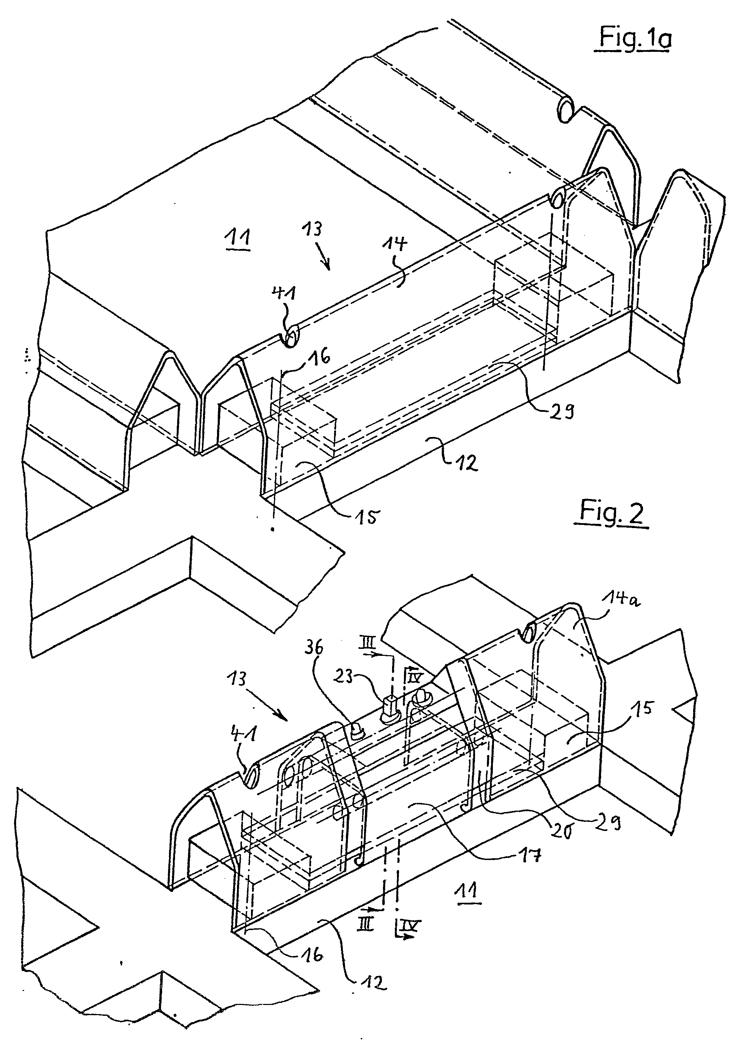

In der Fig. 1 ist eine Lagergestelleinheit 1 mit vierundsechzig Gestellpositionen 2 zur Aufnahme von ebensovielen Brennelementen dargestellt. Eine untere und obere Gitterplatte 3, 4 wird von Streben 5, 6 zusammengehalten und mittels Querstreben 7 versteift. Über Rahmen 8 ist die Lagergestelleinheit 1 neben anderen Lagergestelleinheiten am Boden 9 einer nicht dargestellten Gebäudekonstruktion abgestellt. Die Öffnungen 10 der unteren Gitterplatte 3 dienen zur Fixierung der in die Gestellpositionen 2 eingesetzten Brennelemente an ihren unteren Enden. Dagegen dienen die Öffnungen 11 in der oberen Gitterplatte 4 im wesentlichen der Führung der Brennelemente während des Einführvorganges. Zwischen dem Umfang der Brennelemente und den Innenkanten der Öffnungen 11 muss daher ein Spiel von einigen Millimetern vorhanden sein. Durch dieses Spiel wird auch die Zirkulation von Kühlmedium wie z. B. Luft oder Wasser im Bereich der oberen Gitterplatte gewährleistet.

Wie aus der Fig. 1a, die eine vergrössert dargestellte Teilansicht der oberen Gitterplatte 4 zeigt, zu ersehen ist, sind auf allen Stegen 12 Einführhilfen 13 angeordnet. Der Fuss eines am Kran hängenden Brennelements wird beim Ablassen von den Einführhilfen in die Öffnungen eingeführt.

Damit wird das Einführen erleichtert und ein Anstossen des Brennelements an der oberen Gitterplatte vermieden. Die Einführhilfen bestehen aus einem haubenförmigen Führungsblech 14, das mit Klötzen 15 und einem Flachstück 29 zu einer Einheit verbunden ist, die auf den Stegen 12 der oberen Gitterplatte 4 befestigt ist.

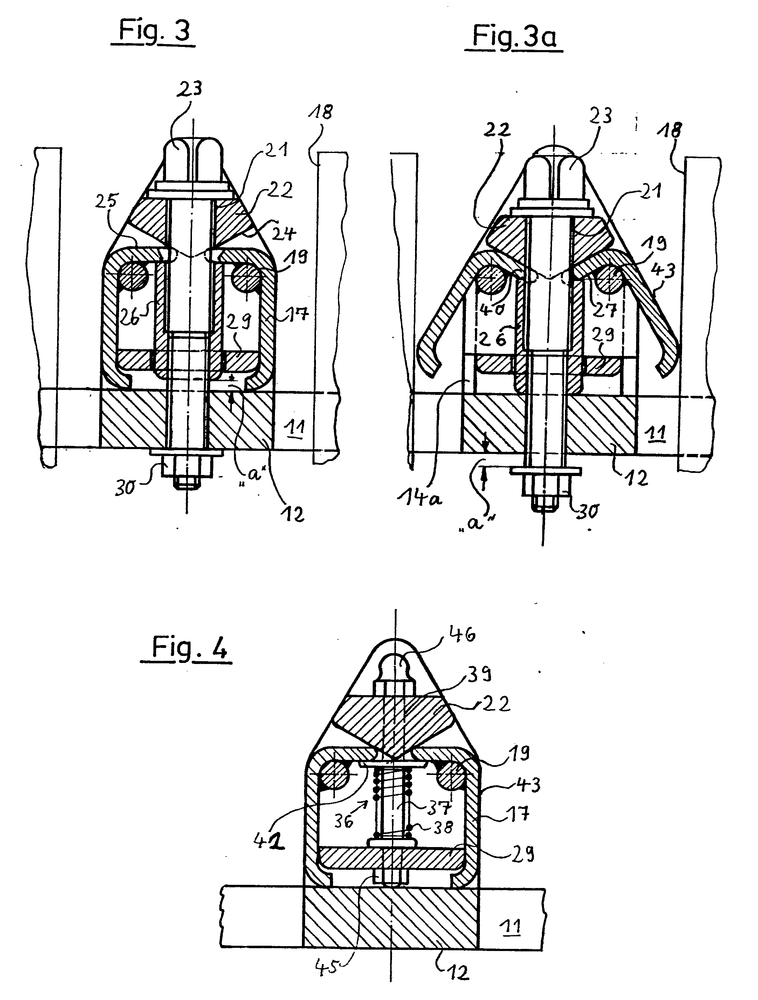

Erfindungsgemäss wird nun vorgesehen, dass wenigstens Teile dieser Einführhilfen nach dem Einsetzen der Brennelemente seitlich ausschwenkbar und an den Brennelementkopf anlegbar sind. Gemäss dem in den Fig. 2 bis 4 dargestellten Ausführungsbeispiel ist der mittlere Teil einer die Breite der Öffnung 11 aufweisenden Einführhilfe 13 als schwenkbare Klappe 17 ausgebildet. Dabei ist in der Fig. 2 aus Gründen der besseren Übersicht nur eine Einführhilfe dargestellt. Selbstverständlich sind alle eine Öffnung 11 umgebenden Stege mit einer Einführhilfe versehen. Im eingeschwenkten Zustand (Fig. 2, 3 und 4) fluchten die Klappen 17 mit den Führungsblechen 14a und unterstützen die Brennelementeinführung. Sind die Klappen ausgeschwenkt (Fig. 3a), liegen sie an den Seitenflächen des Brennelements 18 an und dienen als Halteelement zur Überbrückung des Spiels zwischen Brennelement 18 und Stegen 12 der Öffnung 11. An den Klappen sind Gelenkbolzen 19 angeschweisst, die mit ihren freien Enden in Wangen 20 drehbar gelagert sind. Die Wangen sind an der Oberseite des Flachstückes 29 befestigt. Durch eine Bohrung 21 eines zwischen den Wangen 20 in senkrechter Richtung bewegbaren Keilstückes 22 führt eine Schaftschraube 23, die mit ihrem Gewindeteil in den Steg 12 eingeschraubt ist. Das Keilstück 22 ist so bemessen, dass im eingeschwenkten Zustand der Klappen die höchste Erhebung der Keilflächen 24 die Fläche 25 der Klappen 17 berührt. In dieser Klappenstellung berührt eine auf der Schaftschraube 23 befestigte Hülse 26 mit ihrer oberen Stirnfläche die Innenfläche 27 der Klappen 17, so dass die Klappen an ihren oberen Enden 40 zwischen Keilstück und Hülse eingeklemmt sind. Zwischen der unteren Stirnfläche 28 der Hülse 26 und dem Steg 12 ist ein Abstand «a» vorgesehen. Ein Flachstück 29, das an den Wangen 20 befestigt und zur Durchführung der Hülse 26 ausgespart ist, dient als Anschlag für die Klappen in ihrer eingeschwenkten Stellung. Sobald die Brennelemente in die Gestellpositionen eingesetzt sind, werden Klappen 17 in die aus der Fig. 3a ersichtlichen Stellung gebracht, so dass sie zum Anliegen an die Brennelemente 18 kommen. Durch Drehen der Schraube 23 im Uhrzeigersinn bewegen die Keilflächen 24 des Keilstückes 22 die Klappen 17 um ihre Gelenkbolzen 19 in die ausgeschwenkte Stellung. Um eine Beschädigung der Klappen zu vermeiden, ist die Schwenkbewegung nach aussen mit dem Anlegen der unteren Stirnfläche der Hülse 26 an den Steg 12 begrenzt (Fig. 3a). Aus dem gleichen Grunde ist die Schwenkbewegung nach innen sowohl durch das Flachstück 29 als auch durch die Mutter 30 begrenzt (Fig. 3). Zur Ausführung der Schwenkbewegung ist also jeweils eine Bewegung der Schaftschraube 23 um den Abstand «a» notwendig.

Wie aus der Fig. 4 zu ersehen ist, wird die Schwenkbewegung durch ein Federelement 36 unterstützt. Ein Bundbolzen 37 zur Aufnahme der Schraubenfeder 38 ist in dem Flachstück 29 mit Hilfe der Mutter 45 befestigt und in einer Bohrung 39 des Keilstückes 22 geführt. Das Druckstück 42 überträgt die Federkraft auf die Klappen 17. Die Festlegung gegenüber dem Gleitstück erfolgt über die Hutmutter 46. Die erfindungsgemässen Einführhilfen sind mit den Klappen 17 so weit zu einem Bauteil vormontiert, dass dasselbe lediglich noch mittels durch die Öffnungen 41 einführbaren Schrauben 16 an den Stegen 12 befestigt wird.

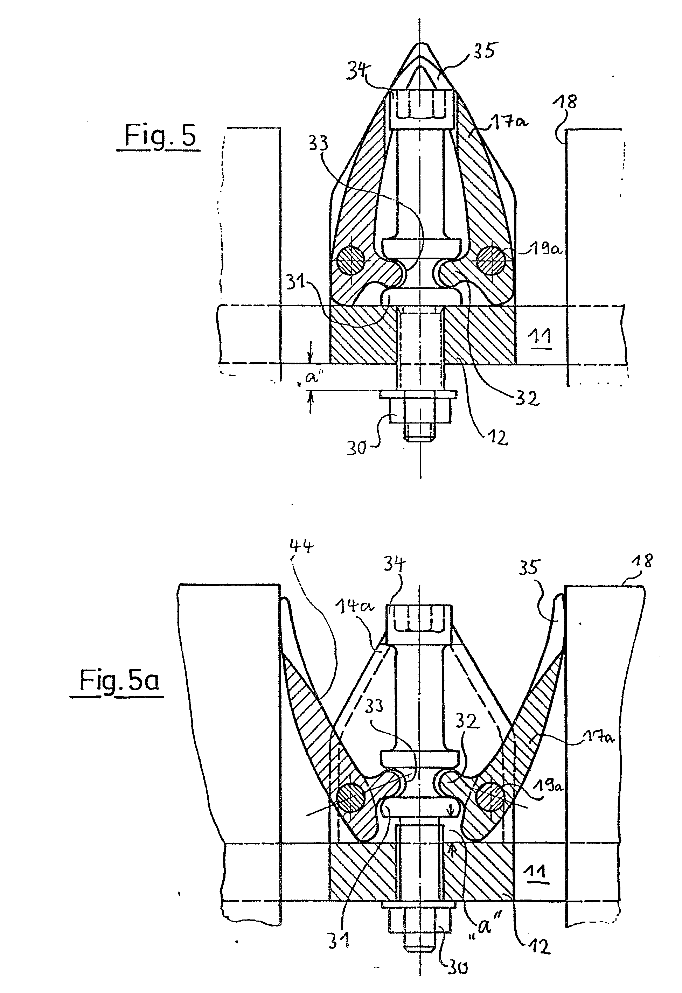

Ein anderes Ausführungsbeispiel der Klappen und ihrer Bewegungssteuerung ist in den Fig. 5, 5a gezeigt. Die Klappen 17a sind ebenfalls mit Gelenkbolzen 19a versehen. An den Klappen befinden sich Führungsnocken 32, die in eine Ringnut 33 der Bundschraube 34 eingreifen. Eine Bewegung der Bundschraube um den Abstand «a» bewirkt je nach der Ausgangsstellung ein Aus- oder Einschwenken der Klappen 17a. Die Begrenzung der Schraub- und somit auch der Klappenbewegung ist durch den Bund 31 und die Mutter 30 gegeben.

Damit die Bundschraube 34 auch bei geschlossenen Klappen (Fig. 5) für das Verstellwerkzeug zugänglich ist, sind die Klappen mit einer Aussparung 35 versehen.

Die Flächen 43 der Klappen 17 und die Flächen 44 der Klappen 17a sind mit einer Farbkennzeichnung versehen, die ein optisches Erkennen der geöffneten Stellung aus grösserer Entfernung ermöglicht.

Mit der erfindungsgemässen Lagergestellausbildung wird mit einfachen Mitteln das Spiel zwischen den Stegen der oberen Gitterplatte und den eingelagerten Brennelementen überbrückt und somit eine sichere Lagerung gegen Einwirkungen von aussen erreicht.

Bezugszeichenliste

| 1 | Lagergestelleinheit |
|---|---|
| 2 | Gestellpositionen |
| 3 | untere Gitterplatte |
| 4 | obere Gitterplatte |
| 5, 6 | Streben |
| 7 | Querstreben |
| 8 | Rahmen |
| 9 | Boden |
| 10, 11, 41 | Öffnungen |
| 12 | Steg |
| 13 | Einführhilfe |
| 14, 14a | Führungsbleche |
| 15 | Klötze |
| 16 | Schraube |
| 17, 17a | Klappen |
| 18 | Brennelement |
| 19, 19a | Gelenkbolzen |
| 20 | Wangen |
| 21, 39 | Bohrung |
| 22 | Keilstück |
| 23 | Schaftschraube |
| 24 | Keilflächen |
| 25, 43, 44 | Fläche |
| 26 | Hülse |
| 27 | Innenfläche |
| 28 | untere Stirnfläche |
| 29 | Flachstück |
| 30, 45 | Mutter |
| 31 | Bund |
| 32 | Führungsnocken |
| 33 | Ringnut |
| 34 | Bundschraube |
| 35 | Aussparung |
| 36 | Federelement |

| | |
|---|---|
| 37 | Bundbolzen |
| 38 | Schraubenfeder |
| 40 | obere Enden |
| 42 | Druckstück |
| 46 | Hutmutter |

## Patentansprüche

1. Lagergestell zur Aufnahme von sich in Längsrichtung erstreckenden Brennelementen, das an seinem oberen Ende eine Gitterplatte und Einführhilfen zum erleichterten Einführen der Brennelemente in die Öffnungen der Gitterplatte aufweist, dadurch gekennzeichnet, dass Teilbereiche der Einführhilfen (13) als schwenkbare Klappen (17) ausgebildet sind, dass zur Ausführung der Schwenkbewegung um Gelenkbolzen (19) eine Schaftschraube (23) vorgesehen ist, die mit einem Keilstück (22) und einer Hülse (26) versehen ist, wobei die Klappen (17) an ihrem oberen Ende (40) zwischen Keilstück und Hülse eingeklemmt sind.

2. Lagergestell zur Aufnahme von sich in Längsrichtung erstreckenden Brennelementen, das an seinem oberen Ende eine Gitterplatte und Einführhilfen zum erleichterten Einführen der Brennelemente in die Öffnungen der Gitterplatte aufweist, dadurch gekennzeichnet, dass Teilbereiche der Einführhilfen als schwenkbare Klappen (17a) ausgebildet sind, dass zur Ausführung der Schwenkbewegung um Gelenkbolzen (19) eine mit einer Ringnut (33) versehene Bundschraube (34) vorgesehen ist, dass jede Klappe (17a) eine Führungsnocke (32) aufweist und dass die Führungsnocken diametral gegenüberliegend in die Ringnut eingreifen.

3. Lagergestell nach Anspruch 1 oder 2, dadurch gekennzeichnet, dass die Schwenkbewegung der Klappen (17, 17a) durch Anschläge begrenzt ist.

4. Lagergestell nach einem der Ansprüche 1 bis 3, dadurch gekennzeichnet, dass die Klappen (17, 17a) an ihren Flächen (43, 44) mit einer Farbkennzeichnung versehen sind.

## Claims

1. A storage rack for storing fuel assemblies composed of fuel rod bundles, which includes at its upper end a grid plate and insertion aids for facilitating the insertion of the fuel assemblies into the openings of the grid plate, characterized in that some portions of the insertion aids (13) are hinged flaps (17), that for performing the swinging movement around hinge pins (19) a headless screw (23) is provided which is fitted with a key (22) and a sleeve (26), with the flaps (17) being retained at their upper ends (40) between key and sleeve.

2. A storage rack for storing fuel assemblies composed of fuel rod bundles, which includes at its upper end a grid plate and insertion aids for facilitating the insertion of the fuel assemblies into the openings of the grid plate, characterized in that some portions of the insertion aids are hinged flaps (17a), that for performing the swinging movement around hinge pins (19) a collar screw (34) fitted with an annular groove (33) is provided, that each flap (17a) is provided with a guide cam (32), and that diametrically opposite guide cams engage the annular groove.

3. A storage rack as per claims 1 or 2, characterized in that the swinging movement of the flaps (17, 17a) is limited by stops.

4. A storage rack according to any one of claims 1 through 3, characterized in that the flaps (17, 17a) are provided with color markings at their surfaces (43, 44).

## Revendications

1. Bâti de stockage pour la réception d'éléments combustibles s'étendant dans le sens longitudinal, comprenant à son extrémité supérieure une plaque à grille et des accessoires d'introduction pour faciliter l'introduction des éléments combustibles dans les orifices de la plaque à grille, caractérisé en ce que des zones partielles des accessoires d'introduction (13) sont réalisées comme des volets pivotants (17), en ce que, pour exécuter le mouvement de pivotement autour de tiges d'articulation (19), on prévoit une tige filetée (23) qui est munie d'une pièce cunéiforme (22) et d'un manchon (26), les volets (17) étant coincés sur leur extrémité supérieure (40) entre la pièce cunéiforme et le manchon.

2. Bâti de stockage pour la réception d'éléments combustibles s'étendant dans le sens longitudinal, comprenant à son extrémité supérieure une plaque à grille et des accessoires d'introduction pour faciliter l'introduction des éléments combustibles dans les orifices de la plaque à grille, caractérisé en ce que des zones partielles des accessoires d'introduction sont réalisées comme des volets pivotants (17a), en ce que, pour exécuter le mouvement de pivotement autour de tiges d'articulation (19), on prévoit une vis (34) à collet munie d'une rainure annulaire (33), en ce que chaque volet (17a) présente un ergot de guidage (32) et en ce que les ergots de guidage s'engagent dans la rainure annulaire en se trouvant diamétralement en face l'un de l'autre.

3. Bâti de stockage selon la revendication 1 ou la revendication 2, caractérisé en ce que le mouvement de pivotement des volets (17, 17a) est limité par des butées.

4. Bâti de stockage selon l'une des revendications 1 à 3, caractérisé en ce que les volets (17, 17a) sont munis sur leurs surfaces (43, 44) d'une désignation en couleur.

## Fig. 1

Fig. 1a

Fig. 2

0 026 364

Fig. 3

Fig. 3a

Fig. 4

9

Fig. 5

Fig. 5a